# EUROPEAN PATENT APPLICATION

(11) **EP 2 492 441 A2**
(43) Date of publication of application: **29.08.2012**
(21) Application number: 12156954.5
(22) Date of filing: 24.02.2012
(51) Int. Cl.: F01D 5/14

(54) **System for measuring parameters of fluid flow in turbomachinery**

(30) Priority: 25.02.2011 US 201113035668
(71) Applicant: General Electric Company, Schenectady, New York 12345 (US)
(72) Inventor: Schleif, Kurt K., Greenville, South Carolina 29615 (US); Hudson, Dan M., Greenville, South Carolina 29615 (US)
(74) Representative: Cleary, Fidelma

(57) **Abstract**

A system, including, a boundary layer rake, including a rake body, a coolant path extending through the rake body, and a first probe coupled to the rake body, wherein the first probe is configured to measure a first parameter of a first boundary layer flow along a first wall.

## Description

### BACKGROUND OF THE INVENTION

The disclosed subject matter relates to turbomachinery, such as a gas turbine engine. More particularly, the disclosed subject matter relates to systems for measuring parameters of a fluid flow in various turbomachinery.

The design and operation of turbomachinery, such as a gas turbine engine, may benefit from improved measurements of various parameters of a fluid flow. These measurements may relate to the temperature, pressure, flow rate, or emissions levels in the fluid flow. Unfortunately, existing systems do not provide boundary layer measurements within a boundary layer along a wall of the fluid flow. As a result, existing systems may not enable a complete or accurate analysis of the fluid flow, thereby resulting in less than optimal decisions for the design and operation of the turbomachinery.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first aspect, the invention resides in a system including a flow path rake, including a rake body, a coolant path extending through the rake body, and a first probe coupled to the rake body, wherein the first probe is configured to measure a first parameter of a flow along a flow path.

The flow path rake may be a boundary layer rake, and wherein the first probe is configured to measure a first parameter of a first boundary layer flow along a first wall.

The coolant path may comprise a gas coolant path comprising a plurality of film cooling outlets in the rake body.

### BRIEF DESCRIPTION OF THE DRAWINGS

Embodiments of the present invention will now be described, by way of example only, with reference to the accompanying drawings in which:
FIG. 1 is a schematic flow diagram of an embodiment of a gas turbine engine that may employ a boundary layer rake;
FIG. 2 is a front view of an embodiment of a test assembly with boundary layer rakes;
FIG. 3 is a perspective view of an embodiment of a boundary layer rake assembly;
FIG. 4 is a perspective view of an embodiment of a pressure or emissions measuring boundary layer rake;
FIG. 5 is a perspective view of an embodiment of a temperature measuring boundary layer rake;
FIG. 6 is a cross-sectional side view of an embodiment of the boundary layer rake in FIG. 4;
FIG. 7 is a partial cross-sectional side view of an embodiment of a boundary layer rake along line 7-7 of FIG. 6;
FIG. 8 is a cross-sectional top view of an embodiment of a boundary layer rake along line 8-8 of FIG. 6;
FIG. 9 is a cross-sectional top view of an embodiment of a boundary layer rake along line 8-8 of FIG. 6; and
FIG. 10 is a cross-sectional side view of an embodiment of a boundary layer rake.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As discussed in detail below, the disclosed embodiments enable near wall measurements within a boundary layer along a wall of a fluid flow using a boundary layer rake. The boundary layer measurements supplement primary measurements by a primary rake extending across the fluid flow, thereby enabling a more complete analysis and model of the fluid flow. These measurements may relate to the temperature, pressure, flow rate, pollutant emissions levels, smoke levels, flame presence, gas composition, or any other parameter of the fluid flow. In certain embodiments, the boundary layer rake and the primary rake may be used to acquire measurements in a combustor or a turbine of a gas turbine engine. As a result of the disclosed embodiments, the improved analysis and model of the fluid flow may enable improved decisions for the design and operation of various turbomachinery, such as the gas turbine engine. Furthermore, the disclosed embodiments of the rake may be used in various test rigs with a high temperature flow path, combustion test stands that simulate a single combustor section of a gas turbine, or any other flow path benefiting from boundary layer measurements. In addition, the disclosed embodiments may provide a coolant path through the boundary layer rake and the primary rake. For example, the coolant path may be configured to circulate a coolant fluid (e.g., a liquid or gas coolant) through the boundary layer rake and the primary rake, thereby protecting the rake from damage due to heat in the fluid flow, e.g., hot combustion products. By further example, the coolant path may lead to outlet ports or vents (e.g., film cooling orifices) in the boundary layer rake and the primary rake, thereby allowing at least some of the coolant to exit from the rake into the fluid flow. The discharged coolant may flow at partially along an external surface of the boundary layer rake and the primary rake to provide thermal shielding and cooling of the external surface (e.g., film cooling). Accordingly, the disclosed embodiments improve the acquisition of data in various fluid flows, such as flows of hot combustion products.

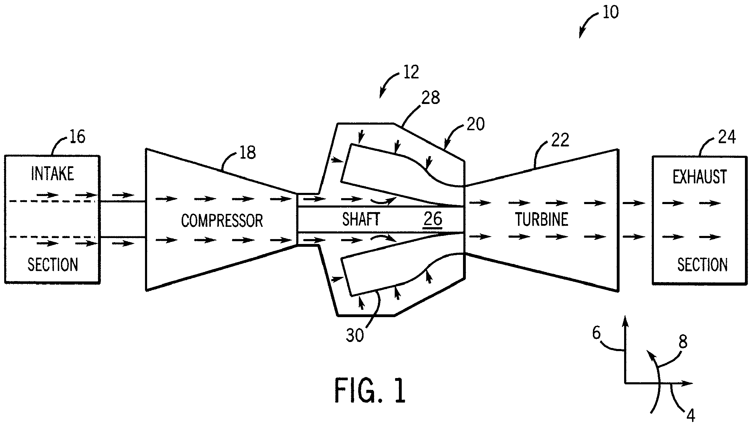

Turning now to the drawings, FIG. 1 is a schematic flow diagram of an embodiment of a system 10 with a gas turbine 12 that may employ a near wall rake or boundary layer rake. As discussed below, the rear wall rake may be disposed along a wall within a boundary layer of a fluid flow to improve measurements of the fluid flow. In the following discussion, reference may be made to an axial direction or axis 4, a radial direction or axis 6, and a circumferential direction or axis 8 to define orientations of various components, such as the boundary layer rakes. In certain embodiments, the system 10 may include an aircraft, a watercraft, a locomotive, a power generation system, or combinations thereof. The illustrated gas turbine engine 12 includes an air intake section 16, a compressor 18, a combustor section 20, a turbine 22, and an exhaust section 24. The turbine 22 is coupled to the compressor 18 via a shaft 26.

As indicated by the arrows, air may enter the gas turbine engine 12 through the intake section 16 and flow into the compressor 18, which compresses the air prior to entry into the combustor section 20. The illustrated combustor section 20 includes a combustor housing 28 disposed concentrically or annularly about the shaft 26 between the compressor 18 and the turbine 22. The compressed air from the compressor 18 enters combustors 30, where the compressed air may mix and combust with fuel within the combustors 30 to drive the turbine 22. From the combustor section 20, the hot combustion gases flow through the turbine 22, driving the compressor 18 via the shaft 26. For example, the combustion gases may apply motive forces to turbine rotor blades within the turbine 22 to rotate the shaft 26. After flowing through the turbine 22, the hot combustion gases may exit the gas turbine engine 12 through the exhaust section 24.

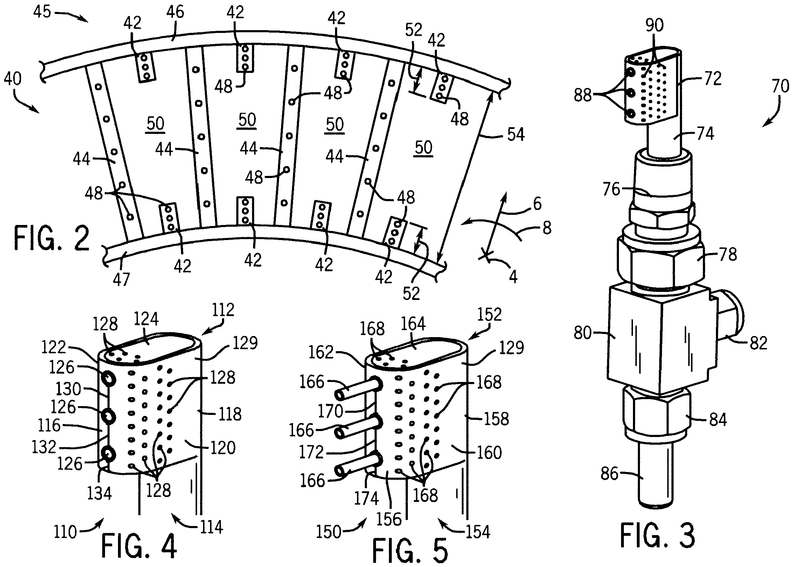

FIG. 2 is a front view of an embodiment of a test assembly 40 with near wall rakes or boundary layer rakes 42, primary rakes 44, and a frame 45. The frame 45 defmes a first wall 46 and a second wall 47. The rakes 42 and 44 include apertures 48. In some embodiments, the apertures 48 permit the placement of probes or sensors in the flow path 50 of a fluid flow, such as hot combustion gases in the gas turbine engine 12 of FIG. 1. The sensors may include temperature sensors, pressure sensors, flow rate sensors, emissions sensors, or any combination thereof. For example, each probe may include a single type of measurement sensor, or each probe may be multifunctional with multiple types of measurement sensors. In other embodiments, the apertures 48 permit removal of combustion gases from the flow and into an analyzer with sensors that measure parameters of the fluid flow, such as emissions of pollutants such as carbon oxides, sulfur oxides, nitrogen oxides, or particulate matter. In particular, the sensors may permit more accurate modeling of the fluid flow (e.g., combustion products) enabling better and more robust hardware designs for the turbomachinery, such as gas turbine engines.

As illustrated, the primary rakes 44 are positioned in the flow path 50 and run the entire distance 54 between the walls 46 and 47 of the frame 45. The rakes 44 are able to measure fluid flow properties away from the walls 46 and 47 outside of the boundary layer, while the boundary layer rakes 42 advantageously permit the measurement of flow properties of the boundary layers in close proximity to the walls 46 and 47. For example, the apertures 48 of the boundary layer rakes 42 are positioned within the boundary layers along the walls 46 and 47. In certain embodiments, the boundary layer rakes 42 may extend radially 6 away from the walls 46 and 47 by a radial distance 52, which is substantially less than a total radial distance 54 between the walls 46 and 47. For example, the radial distance 52 may be less than approximately 5, 10, 15, 20, 25, or 30 percent of the total distance 54 between the walls 46 and 47. By further example, the radial distance 52 may be less than approximately 1, 2, 3, 4, 5, 6, 7, 8, 9, or 10 percent of the total distance 54. However, the boundary layer rakes 42 may be used at any radial distance 52 between 0 and 100 percent of the total distance 54. Similarly, each aperture 48 may be disposed at a radial distance of between approximately 1 to 15 percent of the total distance 54. For example, in the illustrated embodiment, each boundary layer rake 42 includes three apertures 48, which may be disposed at radial distances of approximately 1 to 5, 2 to 10, and 3 to 15 percent (e.g., , 8, and 12 percent) of the total distance 54, respectively. However, the apertures 48 may be disposed at any suitable radial distance within a boundary layer, such as approximately 1, 2, 3, 4, 5, 6, 7, 8, 9, 10, 11, 12, 13, 14, and/or 15 percent of the total distance 54. This positioning may advantageously permit a more accurate measurement of the flow's boundary layer. A better understanding of the flow's boundary layer may assist in the design of more robust hardware, because it is the boundary layer that interacts with the walls and hardware of the turbomachinery (e.g., gas turbine engine 12).

In the embodiment of FIG. 2, a single boundary layer rake 42 is positioned between each pair of adjacent primary rakes 44 on the first wall 46 and each pair of adjacent primary rakes 44 on the second wall 47. In other embodiments, (e.g., 2, 3, 4, 5, or more) multiple boundary layer rakes 42 may be positioned between each pair of adjacent primary rakes 44 on the first and second walls 46 and 47. Furthermore, the boundary layer rakes 42 may be positioned at a common axial position, an upstream axial 4 position, or a downstream axial 4 position relative to the rakes 44, wherein the boundary layer rakes 42 are either axially 4 in-line with or circumferentially 8 between the rakes 44. Thus, the rakes 42 and 44 may be mounted to the walls 46 and 47 in a variety of arrangements to obtain measurements in a grid defined by the apertures 48 across the fluid flow path 50. The apertures 48 may be spaced the same or different on the boundary layer rakes 42 and the primary rakes 44. For example, a radial 6 spacing between apertures 48 on the boundary layer rakes 42 may be less than approximately 10, 20, 30, 40, 50, 60, 70, 80, or 90 percent of a radial 6 spacing between apertures 48 on the primary rakes 44. In certain embodiments, the apertures 48 on the boundary layer rakes 42 may have a radial 6 spacing of approximately 10 to 50 or 20 to 40 percent of a radial 6 spacing between apertures 48 on the primary rakes 44. However, any suitable radial 6 spacing may be used for the apertures 48 on the rakes 42 and 44.

In the illustrated embodiment, the boundary layer rakes 42 and the primary rakes 44 include an internal coolant passage to flow a coolant fluid (e.g., gas or liquid) through the rakes 42 and 44. For example, the coolant fluid may include a coolant liquid (e.g., water), or a coolant gas (e.g., air, CO₂, or N₂), or steam. In some embodiments, the internal coolant passages provides a coolant loop into, and out of the rakes 42 and 44 without discharge into the monitored flow (e.g., combustion exhaust flow). In other embodiments, the internal coolant passages provide a one-way flow into the rakes 42 and 44 with a discharge into the monitored flow. For example, the discharge flow of the coolant fluid may pass through a plurality for cooling orifices (e.g., film cooling orifices) to cool and protect an exterior surface of the rakes 42 and 44. Therefore, the discharge flow may be a gas coolant, such as air, directed along the exterior surface. The film cooling is discussed below with reference to the boundary layer rakes 42, but is equally applicable to the primary rakes 44.

FIG. 3 is a perspective view of an embodiment of a boundary layer rake assembly 70. The boundary layer rake assembly 70 includes a rake body 72, a tube 74, frame connector 76, tube adapter 78, tube adapter body 80, tube adapter 82, tube adapter 84, and tube 86. The rake body 72 further defines sensor apertures 88 and film cooling outlets 90. The apertures 88 enable sensors either within or external to the rake body 72 to collect measurements about the boundary layer, while the rake body 72 extends into the boundary layer flow (e.g., combustion gas flow). In order for the rake body 72 to withstand the high temperatures of the combustion gases, the cooling outlets 90 enable a shielding/cooling gas film (e.g., air cooling film) to protect the body 72. This cooling film, along with other thermal management features, may advantageously enable the rake body 72 to withstand temperatures above a melting temperature of the rake material. For example, as discussed below, the rake body 72 may employ thermal management features such as film cooling, or impingement cooling, or a thermal barrier coating (TBC), or any combination thereof, to enable operation of the rake body 72 in a hot gas flow substantially about the melting temperature of the rake material. In particular, the thermal management features may protect the rake body 72 in hot gas temperatures greater than 1.1 to 10, 2 to 8, or 3 to 5 times the melting temperature of the rake material. Thus, depending on the material composition of the rake body 72 and the thermal management features, the rake body 72 may be able to withstand temperatures up to, equal to, or above approximately 600, 700, 800, 900, 1000, 1100, 1200, 1300, 1400, or 1500 degrees Celsius or greater. However, these example temperatures are not intended to be limiting, as the ranges will change depending on the material composition of the rake body 72 and the thermal management features. In certain embodiments, a cooling airflow may pass through tube 86, tube adapter 84, body 80, adapter 78, connector 76, tube 74 and into rake body 72 where the cooling airflow cools the interior of the rake body 72 before exiting through the cooling outlets 90. In some embodiments, the cooling air for the outlets 90 may flow through the tube adapter 82. Inside the rake body 72, the cooling airflow may impinge on the interior surface of the rake body 72 to provide impingement cooling.

In the illustrated embodiment, the frame connector 76 mounts the assembly 70 to the frame 44, the tube 74 extends through the wall 46 or 47, and the rake body 72 extends into the flow path 50. With the rake body 72 firmly anchored in the frame 44, the rake body apertures 84 enable data collection (e.g., temperature, pressure, emissions, etc.) either with sensors in the apertures 84 or with sensors remote from the boundary layer rake assembly 70. In either case, the apertures 88 are positioned in close proximity to the wall 46 or 47, thereby enabling boundary layer measurements of the exhaust flow in the flow path.

FIG. 4 is a perspective view of an embodiment of a boundary layer rake 110. The rake 110 includes a body 112 and tube 114. The body 112 defmes a curved leading edge 116; curved trailing edge 118; side surfaces 120 and 122; a top surface 124; sensor apertures 126; and cooling outlets 128. As illustrated, the sensor apertures 126 are included on the leading edge 116. For example, the sensor apertures 126 may be flush with the leading edge 116. The apertures 126 permit measurement of a fluid flow parameter (e.g., pressure, temperature, or emissions) with a probe or sensor in the rake body 112 or external to the rake body 112. For example, the apertures 126 may enable the collection of combustion gases for analysis. The combustion gases may enter the rake body 112 through apertures 126 and then pass through the tube 114 to an analyzer. In the analyzer, the combustion gases may be tested to determine the pressure, temperature, or emissions (e.g., pollutants such as carbon oxides, sulfur oxides, nitrogen oxides, or particulate matter) present in the flow. In some embodiments, the apertures 126 may include the same or different sensors/probes. For example, the sensors/probes in the apertures 126 may differ from one another (e.g., one aperture 126 may include an emissions probe, one aperture 126 may include a pressure probe, and one aperture 126 may include a temperature probe).

Furthermore, the apertures 126 are separated from each other and from the walls 46, 47 (seen in FIG. 2) by radial distances 130, 132, and 134. As illustrated the distance 130 and 13 are between adjacent apertures 126 while the distances 134 is between the lower aperture 126 and the wall 46 or 47. In certain embodiments, the distances 130, 132, and 134 may be equal or different from one another. For example, the distances 130, 132, and 134 may progressively increase or progressively decrease radially 6 away from the wall 46 or 47. The distances 130, 132, and 134 enable measurement of pressure, temperature, or emissions at different locations in the boundary layer flow. Again, the distance 134 offsets the first probe/sensor from the walls 46, 47. This radial 6 distance 134 may be less than 1, 2, 3, 4, 5, 6, 7, 8, 9, or 10 percent of the total distance 54 between the walls 46 and 47. However, the radial distance 134 may be any suitable percentage of the total distance 54. The ability to measure the pressure, temperature, emissions, or other flow parameters in the boundary layer may advantageously assist in the design of improved hardware.

As illustrated, the rake body 112 includes cooling outlets 128 along an exterior surface 129, e.g., leading edge 116, the side surfaces 120, 122, and the top surface 124 of the rake body 112. The outlets 128 enable cooling air to exit the rake body 112 to provide a cooling film that protects the rake body 112 from the high temperatures of the flow. The illustrated rake body 112 includes 30 cooling outlets 128 on each side surface 120 and 122, and 5 cooling outlets 128 on the top surface 124. In other embodiments, there may be any number of cooling outlets 128 on the leading edge 116, side surfaces 120, 122, and top surface 124. For example, the rake body 112 may include 10 to 100 or 10 to 1000 cooling outlets 128 distributed over the various surfaces. In addition, the outlets 128 may form any number of sizes and shapes. For example, the outlets 128 may be circular, oval, square, irregular, triangular, polygonal, or x-shaped. In some embodiments, the outlets 128 may have a single shape, or a plurality of different shapes, distributed over the various surfaces. In still other embodiments, the outlets 128 may have a uniform or non-uniform spacing. For example, the outlets 128 may be arranged in rows, columns, or various patterns. Furthermore, the outlets 128 may have a variety of angles relative to the exterior surface 129, e.g., approximately 0 to 90, 5 to 75, 10 to 60, or 20 to 45 degrees. For example, the angles may be greater or less than approximately 5, 10, 15, 20, 30, 45, or 60 degrees.

FIG. 5 is a perspective view of an embodiment of a boundary layer rake 150. The rake 150 includes a body 152 and tube 154. The body 152 defmes a curved leading edge 156; curved trailing edge 158; side surfaces 160 and 162; a top surface 164; sensors 166; and cooling outlets 168. As illustrated, the sensors 166 protrude from the leading edge 156, such that the sensors 166 may be substantially surrounded by the fluid flow. The sensors 166 may include temperature sensors (e.g., thermocouples) or any other type of sensor. Thus, the sensors 166 (e.g., temperature sensors) may be used to measure the temperatures in the boundary layer of the fluid flow. For example, the sensors 166 may be type B, K, or N thermocouples depending on the expected measurement temperatures. As illustrated, the sensors 166 are separated by distances 170 and 172. In the present embodiment, the distances 170 and 172 are equal in distance. In other embodiments, the distances 170 may be greater than or equal to the distance 172. The distances 170 and 172 between the sensors 166 permit temperature measurement at different locations in the flow, or more specifically the flow's boundary layer. The ability to measure the temperatures in the boundary layer may advantageously assist in the design of improved hardware.

As illustrated, the cooling outlets 168 are on the leading edge 156, side surfaces 160, 162, top surface 164, and bottom surface. The outlets 168 advantageously permit cooling air to exit the rake body 152 to provide a cooling film that protects the rake body from the extreme temperatures of the flow. As illustrated, there are 35 outlets 168 that are circular in shape and arranged into rows. Similar to the discussion above with respect to FIG. 4, there may any number of outlets on the leading edge 156, side surfaces 160, 162, and top surface 164. For example, there may be 10 to 100 or 10 to 1000 cooling outlets 168 distributed over the various surfaces. In addition, the outlets 168 may form any number of sizes and shapes. For example, the outlets 168 may be circular, square, irregular, triangular, polygonal, in shape. The outlets 168 may have single shape or a plurality of shapes, distributed over the various surfaces. In still other embodiments, the outlets 168 may have uniform or non-uniform spacing. For example, the outlets may be arranged in rows, columns, or various patterns. Furthermore, the outlets 168 may have a variety of angles relative to the exterior surface 129, e.g., 5 to 90 degrees.

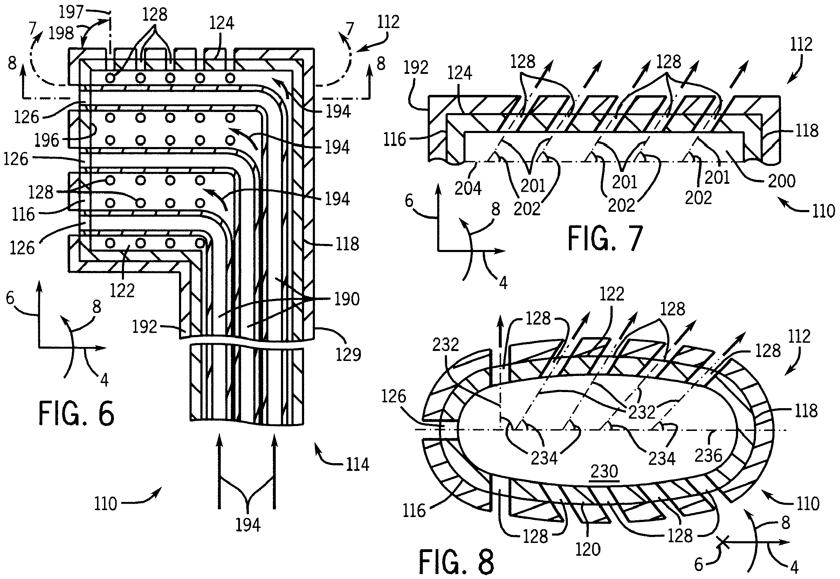

FIG. 6 is a cross-sectional side view of an embodiment of the boundary layer rake 110 of FIG. 4. The rake 110 includes body 112 and tube 114. The body 112 includes the curved leading edge 116; curved trailing edge 118; side surface 122; top surface 124; sensor apertures 126; cooling outlets 128; conduits 190; thermal barrier coating (TBC) 192; and internal cooling path 194. The conduits 190 create a pathway between the apertures 126 and measurement equipment outside of the rake 110. In one embodiment, the conduits 190 may channel a sample of the monitored fluid flow (e.g., combustion gases) to an external analyzer, which may analyze the sampled gases to determine temperature, pressure, emissions levels, or other parameters of the sampled gases. In another embodiment, the conduits 190 route cables (e.g., electrical/data cables) between sensors mounted in the apertures 126 and external data analysis equipment.

As explained above, the rake 110 includes cooling outlets 128 to discharge a coolant fluid (e.g., a coolant gas) from the gas coolant path 194 to create a cooling film on the exterior surface 129 of the rake 110. The cooling path 194 that supplies the cooling film travels through the tube 114 in the space between and around the tubes 190 until reaching the body 112, where the cooling path 194 impinges the coolant fluid against the interior surface 196 (e.g., impingement cooling) before exiting through the outlets 128. Once the coolant gas exits through the outlets 128, the coolant gas creates a cooling film along the exterior surface 129 to protect the rake 110 from high temperatures found in combustion gases. Thus, the cooling path 194 is configured to provide internal and external cooling of the rake 110. The impingement cooling of the interior surface 196 is particularly helpful in cooling the leading edge 116 of the rake 110. Furthermore, the film cooling provided by the cooling outlets 128 is particularly helpful in cooling and thermally shielding the remainder of the exterior surface 128, including side surfaces 120 and 122; top surface 124, and trailing edge 118. As appreciated, the cooling fluid may include a variety of gases, such as air, CO₂, or N₂. Furthermore, the cooling outlets 128 may have a variety of angles relative to the surface 129 to facilitate film cooling. For example, each cooling outlet 128 may have a flow axis 197 at an angle 198 relative to the exterior surface 129, wherein the angle 198 may range between approximately 0 to 90 degrees in an upstream or downstream direction relative to the monitored flow (e.g., combustion gas flow). The thermal barrier coating 192 provides additional thermal protection for the rake 110.

FIG. 7 is a partial cross-sectional side view of an embodiment of the boundary layer rake 110 along line 7-7 of FIG. 6. The boundary layer rake 110 defines the top surface 124 with outlets 128. The outlets 128 enable a cooling gas (e.g., air) traveling through a hollow chamber 200 to create a cooling film over the top surface 124. The cooling film protects the boundary layer rake 110 as it collects data in the high temperature combustion gas flow. As illustrated, each outlet 128 has a flow axis 201 at an angle 202 with the exterior surface 129 and/or an axial axis 204 in the axial direction 4. For example, the angle 202 of each flow axis 201 may be approximately 0 to 90, 5 to 75, 10 to 60, or 20 to 45 degrees. In some embodiments, a plurality or all of the outlets 128 may have the same angle 202 relative to the exterior surface 129 or the axis 204. In other embodiments, the angles 202 may differ from one outlet 128 to another. For example, the angles 202 may progressively change (e.g., increase or decrease) in the axial direction 4, the radial direction 6, or the circumferential direction 8. In the illustrated embodiment, the angle 202 of the outlets 128 along the top surface 124 are substantially equal, and may range between approximately 0 to 90, 5 to 75, 10 to 60 or 20 to 45 degrees. For example, the angle 202 may range between approximately 30 to 60 degrees. The angle 202 of the outlet 128 may assist in directing the cooling film that protects the top surface 124 of the rake body 112. Similarly, the outlets 128 on the side surfaces 120 and 122 may have equal or different angles as described above.

FIG. 8 is a cross-sectional top view of an embodiment of the boundary layer rake 110 along line 8-8 of FIG. 6. The rake 110 includes the body portion 112 that defines the leading edge/surface 116, the trailing edge/surface 118, and the side surfaces 120 and 122. The surfaces 116, 118, 120, and 122 enclose a cavity 230 that enables a cooling gas (e.g., air) to flow through the body 112 and exit through cooling outlets 128. As explained above, the cooling outlets 128 create a cooling film that protects the exterior surface 129 (including sides 120 and 122) of the body 112. The cooling film both convectively cools the exterior surface 129 and shielded the exterior surface 129 from direct contact with the monitored flow (e.g., hot combustion gas flow). Thus, the film cooling increases the use and longevity of the boundary layer rake 110 in harsh environments, such as combustion systems. As illustrated, each of the cooling outlets 128 includes an axis 232 that forms an angle 234 with respect to a longitudinal axis 236 along line 8-8 of FIG. 6 of the body 112. The angle 234 may be for example 0 to 90, 5 to 75, 10 to 60, or 20 to 45 degrees with respect to the centerline 236. In some embodiments, the angle 234 may vary from outlet 128 to outlet 128. For example, some of the outlets 128 may define an angle 234 that increases or decreases with respect to other outlets 128, depending on the location of the outlet 128 on the surfaces 116, 118, 120, and 122. Thus, the angle 234 of the outlet 128 may assist in creating the cooling flow that protects the rake body 112.

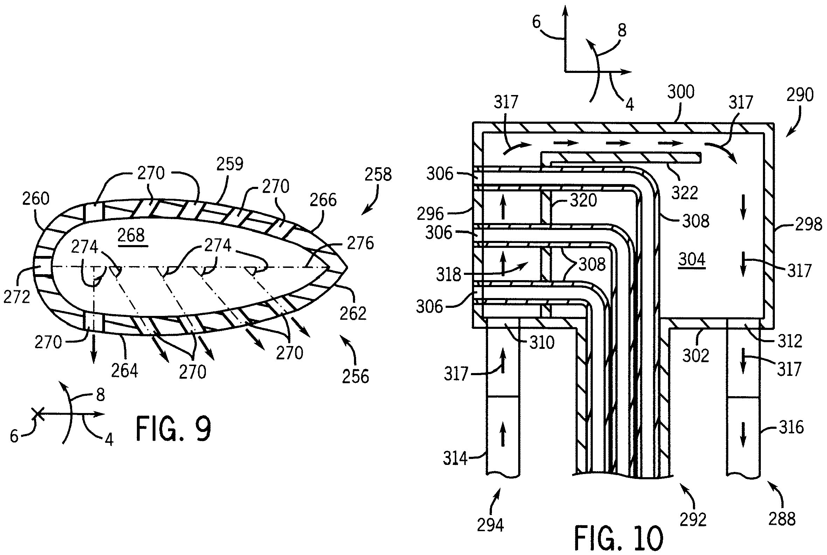

FIG. 9 is a top cross-sectional view of an embodiment of a boundary layer rake 256 along line 8-8 of FIG. 6. The rake 256 includes a body portion 258 that defines an exterior surface 259, a leading edge 260, trailing edge 262, and side surfaces 264 and 266. The surfaces 260, 262, 264, and 266 enclose a cavity 268 that enables flow of a cooling gas (e.g., air) through the body 268 and out through cooling outlets 270. As explained above, the cooling outlets 270 create a cooling film that convectively cools and shields the exterior surface 259 (e.g., sides 264 and 266) of the body 258 from the high temperatures of the flow. This ability increases the longevity of the boundary layer rake 110 while enabling measurement of pressure, emissions, and temperature with a sensor/probe that communicates with a flow through aperture 272. As illustrated each of the outlets 270 forms an angle 274 with respect to a longitudinal axis 276 of the body 258. The angle 274 may be for example 0 to 90, 5 to 75, 10 to 60, or 20 to 45 degrees with respect to the longitudinal axis 276. In some embodiments, the angle 274 may vary from outlet 270 to outlet 270. For example, some of the outlets 270 may define an angle 274 that is increases or decreases with respect to other outlets 270, depending on the location of the outlet 270 on the surfaces 260, 262, 264, and 266. Thus, the angle 274 of the outlet 270 may assist in creating the cooling flow that protects the rake body 258. Furthermore, the body 258 may form various shapes that may improve the aerodynamic flow of the combustion gases around the boundary layer rake 256. As illustrated, the body 258 has an airfoil shape, which may reduce resistance to the flow of combustion gases. In other embodiments, the body 258 may form other shapes including square, circular, oval, rectangular, triangular, or generally elongated.

FIG. 10 is a cross-sectional side view of an embodiment of a boundary layer rake 288, which includes a body 290, tube 292, and closed-loop cooling system 294. The body 290 defines a leading edge 296, trailing edge 298, a top surface 300, and bottom surface 302 that surround a hollow chamber 304. As illustrated, the leading edge 296 includes sensor apertures 306. The sensor apertures 306 permit communication between the combustion gas flow and measurement equipment external to the rake 288 through conduits 308. For example, the conduits 308 may channel combustion gases to an external analyzer for an emissions analysis, temperature analysis, or pressure analysis. In other embodiments, the conduits 308 may permit electrical communication between a thermocouple and exterior systems that track and store the measurements. The bottom surface 302 also defines a coolant entrance aperture 310 and a coolant exit aperture 312, which couple to the cooling system 294.

The cooling system 294 includes a cooling supply pipe 314 and a cooling exit pipe 316. The coolant supply pipe 314 connects to a coolant supply (e.g., liquid or gas coolant supply) that supplies coolant for the system 294. The coolant supply may supply a variety of coolant fluids, such as air, CO₂, N₂, water, steam, other cooling liquids or gases, or any combination thereof. In operation, the coolant travels along a coolant path 317 from the coolant supply pipe 314, through the hollow chamber 304, and out through the coolant exit pipe 316. As the coolant travels along the coolant path 317, the coolant transfers heat away from the rake body 210 to protect the rake 288 from thermal damage. For example, the coolant may enable the rake 288 to operate in hot fluid flows (e.g., combustion gases) substantially above a melting temperature of the rake material. In certain embodiments, the coolant flow may enable the rake 288 to operate in hot gas temperatures of greater than approximately 1.2, 2, 3, 4, 5, 6, 7, 8, 9, or 10 times the melting temperature of the rake material. Inside the cavity 304, the coolant flow is controlled with a baffle 318, which includes a first baffle portion 320 and a second baffle portion 322. The first baffle portion 320 directs the coolant flow along the leading edge 296. Thus, the hottest portion of the rake 110 is cooled before other portions of the rake body 290. After the first baffle portion 320 focuses the coolant flow along the leading edge 296, the second baffle portion 322 directs the coolant flow along the top surface 300 and toward the trailing edge 298. After convectively cooling the trailing edge 298, the coolant flow may then exit through the aperture 312 and enter pipe 316. The pipe 316 may then carry the heated coolant to a heat exchanger, where the coolant releases the absorbed heat before reentry into the coolant supply pipe 314. However, the cooling system 294 may be either a closed loop system or an open loop system in certain embodiments. For example, the cooling system 294 may continuously receive a new supply of coolant, such as water, gas, steam, and so forth. Accordingly, the boundary layer rake 288 may be cooled with a liquid coolant to protect the rake 288 against thermal damage by the hot fluid flow.

Technical effects of the invention include a boundary layer rake capable of measuring boundary layer properties, e.g., pressure, temperature, and emissions, in a high temperature combustion gas flow. The boundary layer rake is equipped with fluid cooling to withstand the high combustion gas temperatures. As explained above, the fluid cooling may include gas or liquid cooling, and the fluid cooling may include impingement cooling, film cooling, and baffles to focus the cooling flow.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system, comprising:
a flow path rake (70,110), comprising:
a rake body (72,112);
a coolant path (194) extending through the rake body (72,112), and a first probe (166) coupled to the rake body (72,112), wherein the first probe is configured to measure a first parameter of a flow along a flow path.

2. The system of claim 1, wherein the flow path rake is a boundary layer rake., and wherein the first probe (166) is configured to measure a first parameter of a first boundary layer flow along a first wall.

3. The system of claim 2, wherein the first probe comprises a first probe location at a first offset distance (134) from the first wall (46), and the first offset distance is less than approximately 25 percent of a total distance (54) between the first wall (46) and a second wall (47) opposite from the first wall (46).

4. The system of claim 2, wherein the coolant path comprises a liquid coolant path.

5. The system of claim 1 or 2, wherein the coolant path comprises a gas coolant path.

6. The system of claim 5, wherein the gas coolant path comprises a plurality of film cooling outlets (128) in the rake body (112).

7. The system of claim 6, wherein each film cooling outlet (128) of the plurality of film cooling outlets has an axis at an angle of less than approximately 90 degrees relative to an exterior surface (129) of the rake body (112).

8. The system of claim 6, wherein the rake body comprises a leading edge (116), a trailing edge (118), and a longitudinal axis extending from the leading edge (116) to the trailing edge (118), wherein a first set of the plurality of film cooling outlets comprises first axes that are angled approximately 90 degrees relative to the longitudinal axis, and a second set of the plurality of film cooling outlets comprises second axes that are angled less than approximately 90 degrees relative to the longitudinal axis in a downstream direction.

9. The system of any preceding claim, wherein the rake body comprises a wall disposed about a hollow chamber, the coolant path extends through the hollow chamber, and the coolant path is configured to impinge a coolant flow against an interior surface of the wall.

10. The system of claim 9, wherein the rake body comprises a leading edge and a trailing edge defined by the wall, and the coolant path is configured to impinge the coolant flow against the interior surface along the leading edge.

11. The system of any preceding claim, wherein the first probe comprises an opening (126), a tube, or a sensor disposed along a leading edge (116) of the rake body (112).

12. The system of any preceding claim, comprising a second probe coupled to the rake body, wherein the second probe is configured to measure a second parameter of the first boundary layer flow along the first wall (46).

13. The system of claim 12, comprising a third probe coupled to the rake body, wherein the third probe is configured to measure a third parameter of the first boundary layer flow along the first wall (46).

14. The system of any preceding claim, wherein the first probe comprises a temperature probe, a pressure probe, or an emissions probe, or a combination thereof.

15. The system of any preceding claim, wherein the coolant path is configured to cool the flow path rake sufficiently to withstand temperatures of greater than approximately 600 degrees Celsius.
